# EUROPEAN PATENT APPLICATION

(11) **EP 0 805 503 A1**
(43) Date of publication of application: **05.11.1997**
(21) Application number: 97400215.6
(22) Date of filing: 30.01.1997
(51) Int. Cl.: H01M 4/38

(54) **Hydrogen storage alloy**

(30) Priority: 01.05.1996 JP 110861/96
(71) Applicant: JAPAN METALS & CHEMICALS CO., LTD., Tokyo 103 (JP)
(72) Inventor: Saito, Nobuyuki, c/o Japan Metals & Chem. Co. Ltd., Tsukuba-shi, Ibaragi-Ken (JP); Takahashi, Masashi, Japan Metals & Chem. Co. Ltd., Tsukuba-shi, Ibaragi-Ken (JP); Sasai, Takashi, c/o Japan Metals & Chem. Co. Ltd., Tsukuba-shi, Ibaragi-Ken (JP)
(74) Representative: Uchida, Kenji

(57) **Abstract**

The hydrogen storage alloy having the formula:

R Niₐ Co_{b} Al_{c} Mn_{d} Feₑ

where R stands for a mixture consisting of lanthanum and at least one of the other rare earth elements rare earth elements, the lanthanum accounting for 25 to 70 wt.% of the total weight of the mixture and the suffixes a, b, c, d and e stand for the atomic ratio of corresponding elements, defined relative to the collective atomic quantities of R and complying with the following conditions:
3.7 ≤ a ≤ 4.0; 0.1 ≤ b ≤ 0.4; 0.2 ≤ c ≤ 0.4; 0.30 ≤ d ≤ 0.45; 0.2 ≤ e ≤ 0.4; 0.5 ≤ b + e ≤ 0.7; and 5.0 ≤ a + b + c + d + e ≤ 5.1, is prepared for use as a negative electrode in a nickel-hydrogen cell.

## Description

The present invention relates to a hydrogen storage alloy suited, notably, for use as a negative electrode of a nickel-type hydrogen cell. In particular, the proposed hydrogen storage alloy can be produced at low cost by reducing the cobalt (Co) content, and can provide a long service life.

Typical hydrogen storage alloys may be of type AB₅, where the letter A (A-site) represents one or more rare earth elements and the letter B (B-site) represents nickel (Ni) and other elements; type AB₂, where the A-site represents zirconium (Zr) and the B-site manganese (Mn); or other types. Type AB₅ hydrogen storage alloy is often used as a material for forming the negative electrode in the nickel-hydrogen cells which are frequently used for powering portable electronic equipment.

In nickel-hydrogen cells, it is known to use alloys consisting of systems of rare earth elements and nickel-containing ternary or quaternary compositions such as RNiAlCo or RNiMnAlCo (where the letter R represents one or more rare earth elements) and LaNiMnAlCo. In the AB₅ alloys which have been employed in practice in nickel-hydrogen cells, the hydrogen storage alloys usually contain about 6-10 wt.% of cobalt. This cobalt component improves the ability of the alloy to withstand repeated charging and discharging cycles, in other words, it improves the "cycle-life" of the alloy.

A number of proposals have been made of cobalt-containing hydrogen storage alloys or of electrodes incorporating such alloys: for example, in the Japanese patent application published after examination under the number 5-70693, alloys of type RNi_{5-(a+b+c)}AₐAl_{b}Co_{c} were proposed, where R represents one or more rare earth elements, A represents at least one of elements Mn, Fe or Cr and cobalt is present in an atomic ratio of 0.01-1; also, in the Japanese patent application published before examination under the number 1-162741, electrodes were described made of hydrogen storage alloy according to the general formula RNiAICoMn, where R is one or more rare earth elements, and having a high cobalt content (atomic ratio of 0.8-1.2).

Cobalt contained in the hydrogen storage alloy has a standard electrode potential only slightly, i.e. 0.01V, lower than that of nickel, and it also has the effect of suppressing the oxidation of nickel caused by the electrical charging-and-discharging operation or by over-discharging at high temperatures. For this reason, cobalt is one of the indispensable elements to be included in this kind of alloy system. However, cobalt is an expensive component which is also employed as an essential element in lithium ion cells and the like, while its production is limited. It is therefore desirable to reduce the quantity of this element that is used.

Furthermore, although a hydrogen storage alloy containing a large quantity of cobalt shows a prolonged cycle-life characteristic, it has a disadvantageously lower electrical discharge rate compared with alloys containing no cobalt. It is therefore desirable to find other routes than increasing cobalt content to obtain a longer life hydrogen storage alloy.

In view of the foregoing, it is an object of the present invention to provide a hydrogen storage alloy having a long cycle-life and a high electrical discharge rate characteristic and being usable for negative electrodes in hydrogen cells.

It is another object of the present invention to provide such an alloy having a reduced quantity of cobalt contained therein, thereby enabling a more economical production of the alloy.

After research was carried out for this purpose, the alloy type RNiCoAIMn, where R indicates a mixture of rare earth elements, was found to provide a useful system. Therefore, research was performed to find an element which can substitute for cobalt in this system.

Several prospective elements for this purpose are described in the above-mentioned published applications No. 5-70693 and No. 1-162741. These elements include Cr, Fe, Cu, Sn, V, Si, Mo, Nb and Mg and the like. Amongst them, the elements Fe, Sn, V, Cr, Si, Mo, Nb, and Cu have been specifically selected by the present inventors and the feasibility thereof have been examined.

Subsequently, iron (Fe) was found to be the most efficient substituting element: this element permits maintenance of the same level of electricity-discharge capacity through electro-chemical reactions and a similar cycle-life characteristic, compared with corresponding non-substituted alloys. Moreover, it does not modify significantly the hydrogen equilibrium pressure in gas phase-solid phase reactions, measured by pressure-composition-isotherm (P-C-T) characteristics, and causes only a low level of hysteresis, i.e. difference between occlusion pressure and discharge pressure.

The alloy of the present invention is composed of the elements R, Ni, Co, Al, Mn and Fe and belongs to the type AB₅. R indicates a mixture of rare earth elements as mentioned above. This mixture contains Lanthanum (La) in a predetermined percentage. Iron is included in order to partially or totally substitute for cobalt.

To find an appropriate composition for the foregoing alloy, the proportion of lanthanum contained in the mixture R of the A site, as well as the atomic ratio of iron, vis-à-vis cobalt, contained at the B site were varied. Correspondingly, the atomic ratio of Ni, Al and Mn to be included in the alloy was adjusted, so as to define a stoichiometric and non-stoichiometric reaction range of A versus B₅ within which no segregated phase detectable by texture observation is formed, and so as to set the hydrogen equilibrium pressure in gas phase-solid phase reaction within a predetermined pressure range.

As a result, there is provided a hydrogen storage alloy having the formula:

R Niₐ Co_{b} Al_{c} Mn_{d} Feₑ

where R stands for a mixture consisting of lanthanum and at least one of the other rare earth elements, lanthanum accounting for 25 to 70 % by weight of the total weight of the mixture; and the suffixes a, b, c, d and e stand for the atomic ratio of corresponding elements, the atomic ratio being defined relative to the collective atomic quantities of R and complying with the following conditions: 3.7 ≤ a ≤ 4.0; 0.1 ≤ b ≤ 0.4; 0.2 ≤ c ≤ 0.4; 0.30 ≤ d ≤ 0.45; 0.2 ≤ e ≤ 0.4; 0.5 ≤ b + e ≤ 0.7; and 5.0 ≤ a + b + c + d + e ≤ 5.1.

Preferably, the above mentioned at least one of the other rare earth elements is either cerium (Ce), neodymium (Nd), promethium (Pm) or samarium (Sm) or a mixture of at least two of these elements.

There is also provided a method of preparing the hydrogen storage alloy characterised by the steps of:
a) preparing a mixture of R, Ni, Co, Al, Mn and Fe in the atomic ratio thereof as defined above;
b) melting the mixture at a temperature ranging from about 1,400 to about 1,500°C;
c) annealing the melt at a temperature of about 1,000°C; and
d) cooling the melt to obtain a solid alloy.

The hydrogen storage alloy of the invention may be used for preparation of an electrode.

As another aspect of the invention, there is provided an electrode comprising the hydrogen storage alloy of the invention.

The alloy as defined above provides an appropriate combination of elements and the atomic proportion thereof, which confers on the alloy a prolonged cycle-life and a large electrical discharge capacity.

In the present invention, the lanthanum content in the mixture R, and the quantitative relationship between cobalt and iron are the most important factors influencing the above-mentioned features when used in cells.

When the iron exceeds the atomic ratio of e = 0.4 vis-à-vis the mixture R, it forms a dense oxide film thereof on the alloy surface, thereby hindering the electric discharge reaction. This occurs insofar as e exceeds 0.4, even if the lanthanum content in the mixture R is maintained within the range of 25 to 70 wt.%.

When the atomic ratio e of iron is less than 0.2, the above-mentioned disadvantages may be avoided. However, oxidation of lanthanum, when it is in a high level of 50-70 wt.%, and oxidation of manganese may occur. The amount of iron is therefore preferably in the range of 0.2 to 0.4 atomic ratio vis-a-vis R.

Further, the limit for iron solid solution may be influenced by the amount of lanthanum present. When this content exceeds 70 wt.%, a segregated phase of iron precipitates. On the other hand, when the content of lanthanum is less than 25 wt.%, a large amount of manganese has to be added so as to adjust the hydrogen equilibrium pressure. Then, it becomes difficult to avoid the formation of manganese oxide. The proportion of lanthanum in the mixture R is therefore preferably within the range of 25 to 70 wt.%.

Moreover, the sum of the atomic ratios b and e of cobalt and iron may preferably range from 0.5 to 0.7. Otherwise, when the sum exceeds 0.7, iron will be passivated so that the electric discharge capacity decreases. Conversely, when the sum is less than 0.5, the cycle-life characteristics deteriorate.

Furthermore, the atomic ratio b of cobalt may preferably range from 0.1 to 0.4. In practice it can actually exceed the above-defined upper limit of 0.4, up to 1.0, without deteriorating the properties of the product. However, for the purpose of reducing the amount of cobalt to be used, the upper limit of 0.4 may be an appropriate figure. On the contrary, when cobalt is added in less than 0.1 atomic ratio, both the electrical discharge capacity and the cycle-life characteristics deteriorate.

As for the atomic ratio c of aluminium, when it is less than 0.2, pressure regulation in the α-phase region becomes difficult, whereas when it is over 0.4, pressure in the α-phase region becomes too low, so that the amount of stored hydrogen decreases.

As for the atomic ratio d of manganese, when it is less than 0.30, hydrogen equilibrium pressure is raised, while, when it exceeds 0.45, the same pressure is lowered. In the latter case, manganese oxide is easily formed in the presence of an alkali aqueous solution, such that this phenomenon cannot be controlled any more by addition of the above defined amount of cobalt and iron.

As for the atomic ratio of the B₅ site, when the sum of the suffixes (a+b+c+d+e) of the formula exceeds 5.1 vis-a-vis R, the constituent elements of the B₅ site form a segregated phase together with iron. Then the remaining phase becomes enriched with the components contained in the mixture R and the cycle-life characteristics deteriorate. On the other hand, when the sum of the suffixes is less than 5.0, the electrical discharge capacity becomes large but the cycle-life characteristics substantially deteriorate. The total of the atomic ratios in the B₅ site vis-à-vis the mixture R of the A site may thus preferably range between 5.0 and 5.1.

The atomic ratio a of nickel is determined by subtracting the total added ratios of Co, Mn, Al and Fe, from the total atomic ratios of the B₅ site ranging between 5.0 and 5.1.

The above and other objects, features and advantages of the present invention will become apparent from the following description of the preferred embodiments, given as a non-limiting example, with reference to the accompanying table 1.

To prepare alloys having compositions shown in Table 1, a predetermined amount of R, Ni, Co, Al, Mn and Fe was weighed, and melted by an arc melting method.

The alloys thus obtained were heated at 1000°C for 10 hours in an Ar atmosphere and then homogenised. The resulting alloys were crushed to powders having particles of a size of 75 pm or less, by means of mechanical grinding. Subsequently metal hydride (MH) electrodes were manufactured from these alloy powders.

To manufacture these MH electrodes, one part by weight of the hydrogen storage alloy was mixed with 0.25 parts by weight of nickel powder as an electrical conductor and 0.03 parts by weight of polytetrafluoroethylene as a binder. Then, an alloy sheet was manufactured therefrom by rolling. The alloy sheet thus obtained was held between nickel mesh and subjected to pressurized shaping, to obtain an electrode sheet of 1.5 X 1.5 mm.

The thus obtained MH electrode was tested for discharge capacity and its cycle-life characteristic. In this test, a separator was placed between the MH electrode and a large capacity, sintered nickel hydroxide electrode and the whole construction was put into a cell. Then, 6N - KOH aqueous solution was poured into the cell as electrolyte to form an open-type half cell.

In this test, the MH electrode was charged at a current density of 60 mA/g at 25 °C until the charged capacity thereof became 360 mAh/g, and the MH electrode was then discharged at a current density of 60 mA/g until the charged capacity thereof became -0.65 V with respect to a reference electrode made from mercury oxide.

The above cycle was repeated until the discharge capacity became saturated. The figure at this saturated point was taken as "discharge capacity" shown in Table 1.

In another cycle test, the MH electrode was charged at a current density of 150 mA/g at a corrosive temperature of 45 °C, so as to effect the test in accelerated conditions, until the charged capacity thereof became 360 mAh/g. Then, the MH electrode was discharged at a current density of 300mA/g until the charged capacity thereof became -0.65 V, as described above.

After repeating the above cycle, cycle-life characteristics were evaluated as the ratio of the discharge capacity maintained at the 150th charging cycle, vis-à-vis the capacity at the first cycle. Table 1 shows these characteristics.

In the alloy system in which atomic ratio b of cobalt and the sum of the atomic ratios of the B site are respectively fixed to 0.2 and 5.1, the added amounts of lanthanum and iron were varied. As can be seen in examples 1 and 2, variation of the percentage of lanthanum causes only a small change in the electrical discharge capacity, and does not much affect this capacity. It is assumed that, as the hydrogen equilibrium pressure is regulated by the addition of aluminium and manganese, the pressure on high H/M (ratio of hydrogen occluded vis-à-vis the alloy) side in the P-C-T diagram is reduced by the increased addition of manganese, thereby increasing hydrogen occlusion.

However, when the percentage of lanthanum in R is less than 70 wt.% and the atomic ratio e of iron is 0.6, a clear drop of discharge capacity was observed (Comparative Sample 2). The reason for this is that the iron forms a dense oxide film on the alloy surface, as do chromium and silicon, thereby impeding the discharge reaction and decreasing the discharge capacity. Hence, the upper limit of atomic ratio e of iron is preferably set to be 0.4 or less.

Then, the amount of iron to be added is examined at a content of lanthanum less than 70 wt.%. As shown in Table 1, samples 1 and 2 of the invention, where the atomic ratio e of iron is 0.4 and b + e of cobalt and iron is 0.6, shows a better discharge capacity than, and similar cycle-life characteristics to, comparative samples 2 and 4 where corresponding figures are 0.6 and 0.8. The features of samples 1 and 2 are comparable to those of the comparative sample 13 which contains about 10 wt.% of cobalt, the figure corresponding to an atomic ratio of 0.8.

Also in comparative sample 1 where the content of lanthanum is low at 25 wt.%, manganese was added with an atomic ratio d of 0.48, exceeding the threshold of 0.45. In such a case, addition of iron and cobalt with atomic ratios of e = 0.2 and b + e = 0.4 can not inhibit the change brought about by manganese.

Accordingly, taking into account the degree to which properties are adjustable by the elements Fe, Co and Al, the atomic ratio d of manganese is preferably limited to 0.45 or less, so as to regulate the pressure at a low level of lanthanum.

In comparative sample 3 where 70 wt.% of lanthanum is used in the mixture R, iron and cobalt are added to give an atomic ratio of e = 0.2 and b + e = 0.4. Then, however, lanthanum cannot be protected from oxidation, with the consequence of a shortened cycle-life.

On the other hand, when the amount of lanthanum is less than 70 wt.% while maintaining the same ratio of e and b + e, not only the lanthanum but also manganese cannot be prevented from oxidation. Moreover, when the ratios of iron and cobalt are raised to give atomic ratios e = 0.6 and b + e = 0.8, the discharge capacity deteriorates due to a passivation of the iron.

In samples 1, 2 and 3, the atomic ratio e of iron is larger than the ratio b of cobalt with e = 0.4 versus b = 0.2, whereas, in sample 4, these ratios are reversed with e = 0.2 and b = 0.4, both cases giving the ratio b + e = 0.6. In the latter sample as in the former samples, a large discharge capacity and good cycle characteristics are obtained. In comparison, in comparative sample 10 where the atomic ratios b and e are both 0.4, giving the ratio b + e = 0.8, characteristics of the product have deteriorated. Therefore, the total of atomic ratios b + e is preferably 0.7 or less.

From the above it will be seen that iron is preferably added in an atomic ratio from 0.2 to 0.4 and the sum of atomic ratios b + e ranges preferably from 0.5 to 0.7.

On the other hand, in comparative sample 11, where the atomic ratios b and e are respectively 0.5 and 0.2, giving b + e = 0.7, characteristics of the product are no better than those of sample 4 of the present invention. Further, in comparative sample 12 which is modelled on sample 2, except for the atomic ratios b and e being respectively 0 and 0.6, both discharge capacity and cycle-life characteristics are deteriorated compared with sample 2 of the present invention. Consequently, the atomic ratio b of cobalt ranges preferably from 0.1 to 0.4.

In comparative samples 6 and 7, high lanthanum content of 80 wt.% is used in the mixture R. Sample 7, where the atomic ratio e of iron is 0.6, exceeding the upper limit of 0.4, shows the cycle-life characteristics significantly deteriorated, compared with those of sample 6 where e is 0.4. Based on observation of the metallic texture, it is assumed that this phenomenon may result from the presence of a large quantity of segregation Ni-Al-Mn-Fe, with the consequence of enriching the remaining phase with rare earth elements.

No segregated phase is observed in comparative samples 2 and 4, where the atomic ratio e of iron is also 0.6. Therefore, the limit for the solid solution of iron may be influenced by the content of added lanthanum.

In view of the foregoing, content of lanthanum in the mixture R is preferably in the range from 25 wt.% to 70 wt.%.

Sample 2 according to the present invention has a large electrical discharge capacity and a prolonged cycle-life characteristic. In contrast, in comparative sample 9 where the ratio A versus B₅ shows a high non-stoichiometric degree of 1:5.2 and in comparative sample 8 where the ratio A versus B₅ is modified to have a reversed non-stoichiometric degree of 1:4.9, the cycle-life becomes shorter. According to observation of the metallic texture, comparative sample 9 shows a significant presence of a segregated phase of Ni-Al-Mn-Fe, whilst comparative 8 shows a significant presence of a phase enriched with rare earth elements. These phase formations seem to modify the remaining phase and deteriorate the cycle-life characteristic. Conversely, sample 3 of the invention has the stoichiometric composition of A:B₅ = 1:5, so that it shows a satisfactory discharge capacity and a prolonged cycle-life characteristic.

From the foregoing, in the alloy system AB₅ of the invention containing R, Niₐ, Co_{b}, Al_{c}, Mn_{d} and Feₑ, the sum of a, b, c, d and e is preferably in the range between 5.0 and 5.1.

**Table 1**

| Sample No. | | R | La wt. % in R | Ni | Co | Al | Mn | Fe | B5 | Electrical Discharge Capacity at 25 °C mAh/g | Cycle-Life * % |
|---|---|---|---|---|---|---|---|---|---|---|---|
| Alloys of the invention | 1 | 1 | 25 | 3.71 | 0.2 | 0.34 | 0.45 | 0.4 | 5.1 | 283 | 87 |
| | 2 | 1 | 70 | 3.85 | 0.2 | 0.28 | 0.37 | 0.4 | 5.1 | 288 | 88 |
| | 3 | 1 | 70 | 3.78 | 0.2 | 0.27 | 0.35 | 0.4 | 5.0 | 285 | 83 |
| | 4 | 1 | 70 | 3.78 | 0.4 | 0.28 | 0.37 | 0.2 | 5.1 | 282 | 89 |
| Comparative Alloys | 1 | 1 | 25 | 3.86 | 0.2 | 0.37 | 0.48 | 0.2 | 5.1 | 281 | 65 |
| | 2 | 1 | 25 | 3.57 | 0.2 | 0.32 | 0.42 | 0.6 | 5.1 | 250 | 92 |
| | 3 | 1 | 70 | 3.99 | 0.2 | 0.31 | 0.40 | 0.2 | 5.1 | 283 | 68 |
| | 4 | 1 | 70 | 3.70 | 0.2 | 0.26 | 0.34 | 0.6 | 5.1 | 263 | 88 |
| | 5 | 1 | 80 | 4.12 | 0.2 | 0.25 | 0.33 | 0.2 | 5.1 | 285 | 73 |
| | 6 | 1 | 80 | 3.98 | 0.2 | 0.22 | 0.30 | 0.4 | 5.1 | 285 | 70 |
| | 7 | 1 | 80 | 3.84 | 0.2 | 0.20 | 0.26 | 0.6 | 5.1 | 290 | 59 |
| | 8 | 1 | 70 | 3.71 | 0.2 | 0.25 | 0.33 | 0.4 | 4.9 | 297 | 48 |
| | 9 | 1 | 70 | 3.91 | 0.2 | 0.30 | 0.39 | 0.4 | 5.2 | 281 | 57 |
| | 10 | 1 | 70 | 3.70 | 0.4 | 0.26 | 0.34 | 0.4 | 5.1 | 268 | 74 |
| | 11 | 1 | 70 | 3.78 | 0.5 | 0.27 | 0.35 | 0.2 | 5.1 | 273 | 78 |
| | 12 | 1 | 70 | 3.85 | - | 0.28 | 0.37 | 0.6 | 5.1 | 262 | 51 |
| | 13 | 1 | 46 | 3.60 | 0.8 | 0.30 | 0.30 | - | 5.0 | 285 | 89 |

| | | | | | | | | | | | |
|---|---|---|---|---|---|---|---|---|---|---|---|
| * Ratio of the electrical discharge capacity at 150th charging cycle versus 1st charging cycle, at 45 °C. | | | | | | | | | | | |

## Claims

1. A hydrogen storage alloy having the formula:
R Niₐ Co_{b} Al_{c} Mn_{d} Feₑ
where R stands for a mixture consisting of lanthanum and at least one of the other rare earth elements, the lanthanum accounting for 25 to 70 % by weight of the total weight of the mixture; and the suffixes a, b, c, d and e stand for the atomic ratio of corresponding elements, said atomic ratio being defined relative to the collective atomic quantities of R and complying with the following conditions: 3.7 ≤ a ≤ 4.0; 0.1 ≤ b ≤ 0.4; 0.2 ≤ c ≤ 0.4; 0.30 ≤ d ≤ 0.45; 0.2 ≤ e ≤ 0.4; 0.5 ≤b + e ≤ 0.7; and 5.0 ≤ a + b + c + d + e ≤ 5.1.

2. The hydrogen storage alloy according to claim 1, wherein said at least one of the other rare earth elements is either cerium (Ce), neodymium (Nd), promethium (Pm) or samarium (Sm) or a mixture of at least two of the said elements.

3. A method of preparing the hydrogen storage alloy according to claim 1 or 2, characterised by the steps of:
a) preparing a mixture of R, Ni, Co, Al, Mn and Fe in the atomic ratios thereof as defined in claim 1;
b) melting said mixture at a temperature ranging from about 1,400 to 1,500°C;
c) annealing said melt at a temperature of about 1,000°C; and
d) cooling said melt to obtain a solid alloy.

4. Use of the hydrogen storage alloy according to claim 1 or 2 for preparation of an electrode.

5. An electrode comprising the hydrogen storage alloy according to claim 1 or 2.
